(19) Europäisches Patentamt
European Patent Office
Office européen des brevets

(11) **EP 3 683 953 B1**

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **19216912.6**

(22) Anmeldetag: **17.12.2019**

(51) Internationale Patentklassifikation (IPC):
**H02P 1/00** *(2006.01)*

(52) Gemeinsame Patentklassifikation (CPC):
**H02P 1/00**

(54) **STEUEREINRICHTUNG UND -VERFAHREN FÜR EIN WÄSCHEPFLEGEGERÄT**

CONTROL DEVICE AND METHOD FOR A LAUNDRY CARE DEVICE

DISPOSITIF ET PROCÉDÉ DE COMMANDE POUR UN LAVE-LINGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2019 DE 102019200426**

(43) Veröffentlichungstag der Anmeldung:
**22.07.2020 Patentblatt 2020/30**

(73) Patentinhaber: **BSH Hausgeräte GmbH 81739 München (DE)**

(72) Erfinder:
• **Albayrak, Hasan Gökcer 14476 Potsdam (DE)**
• **Deckert, Patrick 14943 Luckenwalde (DE)**
• **Skrippek, Jörg 14641 Wustermark (DE)**

(56) Entgegenhaltungen:
**EP-B1- 2 659 583 DE-A1-102016 211 153**

**Beschreibung**

Die vorliegende Erfindung betrifft eine Steuereinrichtung für einen Antriebsmotor für ein Wäschepflegegerät sowie ein entsprechendes Verfahren. Ein Wäschepflegegerät ist im Rahmen der vorliegenden Erfindung insbesondere eine Waschmaschine, kann jedoch auch beispielsweise eine Maschine zum Spülen und/oder Imprägnieren von Wäschestücken sein. Diese weiteren Funktionen können auch in einer Waschmaschine integriert sein.

Zum Rotieren einer Wäschetrommel eines Wäschepflegeräts kommen aufgrund ihrer vorteilhaften Eigenschaften häufig Gleichstrommotoren in Form von bürstenlosen Permanentmagnetmotoren zum Einsatz, welche auch als BLDC- oder PMSM-Motoren bezeichnet werden.

Beim Anfahren eines BLDC-Motors aus dem Ruhezustand auf eine gewünschte Drehzahl kann in der Regel erst ab einer Minimaldrehzahl die Ist-Drehzahl des Motors mit hinreichender Genauigkeit bestimmt werden, beispielsweise mittels eines Positions- und Geschwindigkeitssensors. Daher wird der BLDC-Motor eines Wäschepflegeräts bis zu einer Minimaldrehzahl zunächst gesteuert gefahren, d.h. in einer Steuerungsphase betrieben und nach dem Erreichen dieser Minimaldrehzahl in einen geregelten Betrieb, d.h. eine Regelungsphase des BLDC-Motors übergegangen. Diese Verfahrensweise beim Anfahren bzw. Anlauf eines BLDC-Motors ist aus dem Stand der Technik als "I-F Starting Method" oder "Open Loop Start" bekannt und in der Regel so implementiert, dass in der Steuerungsphase ein konstantes Drehmoment bzw. ein konstanter drehmomentbildender Strom $I_q$ eingeprägt wird, der auch als Querstrom bezeichnet wird. Da das in der Steuerungsphase benötigte Drehmoment jedoch nicht bekannt ist, wird, um den Anlauf des Motors sicher zu stellen, von einem maximalen Lastmoment ausgegangen und dementsprechend ein maximales Drehmoment mittles eines maximalen drehmomentbildenden Stromes $I_{q,max}$ eingeprägt. Nachteilig hieran ist, dass auch bei tatsächlich kleineren Lastmomenten das maximale Drehmoment mittels des maximalen drehmomentbildenden Stromes $I_{q,max}$ eingeprägt und somit unnötig Energie beim Anfahren des BDLC-Motors verbraucht wird.

Aus der EP 2 659 583 B1 ist ein Verfahren zum Anfahren eines BLDC-Motors bekannt, welches eine Erweiterung der vorstehend beschriebenen "I-F Starting Method" darstellt. Gemäß der EP 2 659 583 B1 wird während der Regelungsphase über einen oder mehrere Reversier- bzw. Waschzyklen zu Beginn eines Wäschepflegeprogramms ein mittlerer drehmomentbildender Strom $I_q$ bestimmt und dieser als Referenzstrom für das Anfahren des BLDC-Motors in der Steuerungsphase von nachfolgenden Reversierzyklen des Wäschepflegeprogramms verwendet.

Die Offenlegungsschrift DE 10 2016 211 153 A1 offenbart ein Verfahren zum Ansteuern eines Haushaltsgeräte-Motors mit geberloser Drehzahlregelung.

Es ist die der Erfindung zugrundeliegende Aufgabe, eine Steuereinrichtung für einen Antriebsmotor eines Wäschepflegegeräts und ein entsprechendes Verfahren anzugeben, die, insbesondere im Lichte der vorstehend beschriebenen Nachteile, eine effizientere Pflege von Wäschestücken ermöglichen.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Steuereinrichtung zum Betreiben eines Antriebsmotors, insbesondere eines BLDC-Antriebsmotors auf der Grundlage eines drehmomentbildenden Stroms $I_q$ gelöst, um eine rotierbar gelagerte Wäschetrommel eines Wäschepflegegeräts gemäß eines im Betrieb ablaufenden Wäschepflegeprogramms zu rotieren. Dabei umfasst das Wäschepflegeprogramm wenigstens einen ersten Reversierzyklus und einen zweiten Reversierzyklus, die jeweils eine Steuerungsphase und eine Regelungsphase der Rotation der Wäschetrommel umfassen. Dabei kann der zweite Reversierzyklus auf den ersten Reversierzyklus folgen und die Rotationsrichtung der Wäschetrommel während des ersten Reversierzyklus umgekehrt zu der Rotationsrichtung der Wäschetrommel während des zweiten Reversierzyklus sein. Erfindungsgemäß ist die Steuereinrichtung ausgebildet, während der Steuerungsphase des ersten Reversierzyklus einen Konvergenzwert des drehmomentbildenden Stroms $I_q$ zu erfassen, und in der Steuerungsphase des zweiten Reversierzyklus einen Referenzwert für den drehmomentbildenden Strom $I_q$ einzustellen, welcher auf dem erfassten Konvergenzwert basiert.

Dadurch wird beispielsweise der technische Vorteil erreicht, dass im Vergleich zu bekannten Steuereinrichtungen für den Antriebsmotor einer Wäschepflegevorrichtung weniger Energie beim Anfahren des Antriebsmotors verbraucht wird und der Antriebsmotor weniger stark belastet wird, was sich positiv auf die Lebensdauer des Antriebsmotors auswirken kann.

Gemäß einer Ausführungsform ist die Steuereinrichtung ausgebildet, in einer Konvergenzphase der Steuerungsphase des ersten Reversierzyklus den drehmomentbildenden Strom $I_q$ kontinuierlich zu erniedrigen, einen Winkelfehler $\theta_{err}$ als Abweichung eines erfassten Rotorwinkels $\theta_{OBS}$ von einem gesteuerten Rotorwinkel $\theta_{SET}$ eines Rotors des Antriebsmotors zu erfassen und den Konvergenzwert des drehmomentbildenden Stroms $I_q$ als den drehmomentbildenden Strom $I_q$ zu erfassen, bei dem der Winkelfehler $\theta_{err}$ kleiner als ein Winkelfehlerschwellwert $\theta_{err,min}$ ist. Vorzugsweise liegt der Winkelfehlerschwellwert $\theta_{err,min}$ in einem Bereich von ungefähr 5° bis 10°.

Gemäß einer weiteren Ausführungsform umfasst die Steuereinrichtung einen Beobachter, insbesondere einen Luenberger-Beobachter, welcher ausgebildet ist, den tatsächlichen Rotorwinkel $\theta_{OBS}$ des Rotors des Antriebsmotors zu erfassen. Dadurch wird beispielsweise der technische Vorteil erreicht, dass die Steuereinrichtung effizient und genau den tatsächlichen Rotorwinkel $\theta_{OBS}$ des Rotors des Antriebsmotors erfassen kann.

Gemäß einer Ausführungsform kann der Referenzwert des drehmomentbildenden Stroms $I_q$ zum Ansteuern des Antriebsmotors gleich dem erfassten Konvergenzwert sein. Dadurch wird beispielsweise der technische Vorteil erreicht, dass die Steuereinrichtung effizient den Referenzwert bestimmen kann.

Gemäß einer weiteren Ausführungsform kann die Steuereinrichtung zur Bestimmung des Referenzwerts ausgebildet sein, indem zu dem erfassten Konvergenzwert des drehmomentbildenden Stroms $I_q$ ein Offset-Wert addiert wird. Der Offset-Wert kann vorzugsweise in einem Bereich von ungefähr 1 bis 2 Ampere liegen, insbesondere ungefähr 1,5 Ampere betragen. Dadurch wird beispielsweise der technische Vorteil erreicht, dass der Referenzwert des drehmomentbildenden Stroms $I_q$ zum Ansteuern des Antriebsmotors größer als ein vordefinierter Minimalwert, nämlich größer als der Offset-Wert ist.

Gemäß einer weiteren Ausführungsform kann die Steuereinrichtung ausgebildet sein, für den Referenzwert des drehmomentbildenden Stroms $I_q$ zum Ansteuern des Antriebsmotors einen vordefinierten Minimalwert des drehmomentbildenden Stroms $I_q$ zu verwenden, falls die Summe aus dem erfassten Konvergenzwert und dem Offset-Wert kleiner als der vordefinierte Minimalwert ist, oder für den Referenzwert des drehmomentbildenden Stroms $I_q$ zum Ansteuern des Antriebsmotors einen vordefinierten Maximalwert des drehmomentbildenden Stroms $I_q$ zu verwenden, falls die Summe aus dem erfassten Konvergenzwert und dem Offset-Wert größer als der vordefinierte Maximalwert ist. Dadurch wird beispielsweise der technische Vorteil erreicht, dass der Referenzwert des drehmomentbildenden Stroms $I_q$ zum Ansteuern des Antriebsmotors einen vordefinierten Minimalwert nicht unterschreitet und einen vordefinierten Maximalwert nicht übersteigt und somit ein robuster und fehlerfreier Anlauf des Antriebsmotors sichergestellt werden kann.

Der vordefinierte Minimalwert des drehmomentbildenden Stroms $I_q$ zum Ansteuern des Antriebsmotors kann vorzugsweise in einem Bereich von ungefähr 2 bis 5 Ampere liegen, insbesondere ungefähr 4,5 Ampere betragen, und/oder der vordefinierte Maximalwert des drehmomentbildenden Stroms $I_q$ zum Ansteuern des Antriebsmotors kann vorzugsweise in einem Bereich von ungefähr 5 bis 8 Ampere liegen, insbesondere ungefähr 6,5 Ampere betragen.

Gemäß einer weiteren Ausführungsform können der erste Reversierzyklus und der zweite Reversierzyklus aufeinander folgende Reversierzyklen mit unterschiedlicher Rotationsrichtung des Antriebsmotors sein und die Steuereinrichtung kann ausgebildet sein, während eines Pausenabschnitts, welcher durch das Ende des ersten Reversierzyklus und den Beginn des zweiten Reversierzyklus definiert wird, den Antriebsmotor nicht anzutreiben. Dabei kann die Steuereinrichtung ausgebildet sein, falls die zeitliche Dauer des Pausenabschnitts größer als ein Pausenschwellwert ist, als Referenzwert für den drehmomentbildenden Strom $I_q$ einen vordefinierten Maximalwert des drehmomentbildenden Stroms $I_q$ einzustellen. Dadurch wird beispielsweise der technische Vorteil erreicht, dass fehlerhafte Anläufe aufgrund von Lasterhöhungen vermieden werden können, die während des Pausenabschnitts auftreten können, beispielsweise durch die Zugabe von Wasser in die Wäschetrommel und/oder die Zunahme des Gewichts der Wäschestücke durch die Aufnahme von Wasser. Der Pausenschwellwert kann vorzugweise in einem Bereich von ungefähr 15 bis 45 Sekunden liegen, insbesondere ungefähr 30 Sekunden betragen.

Gemäß einem zweiten Aspekt der Erfindung wird die Aufgabe durch ein Wäschepflegegerät, insbesondere eine Waschmaschine gelöst mit einem Antriebsmotor, einer rotierbar gelagerten Wäschetrommel und einer Steuereinrichtung zum Betreiben des Antriebsmotors gemäß dem ersten Aspekt der Erfindung, um die rotierbar gelagerte Wäschetrommel gemäß eines im Betrieb ablaufenden Wäschepflegeprogramms zu rotieren.

Gemäß einem dritten Aspekt wird die Aufgabe durch ein entsprechendes Verfahren zum Betreiben eines Antriebsmotors, insbesondere eines BLDC-Antriebsmotors auf der Grundlage eines drehmomentbildenden Stroms $I_q$ gelöst, um eine rotierbar gelagerte Wäschetrommel eines Wäschepflegegeräts gemäß eines im Betrieb ablaufenden Wäschepflegeprogramms zu rotieren. Dabei umfasst das Wäschepflegeprogramm wenigstens einen ersten Reversierzyklus und einen zweiten Reversierzyklus, die jeweils eine Steuerungsphase und eine Regelungsphase der Rotation der Wäschetrommel umfassen. Dabei kann der zweite Reversierzyklus auf den ersten Reversierzyklus folgen und die Rotationsrichtung der Wäschetrommel während des ersten Reversierzyklus umgekehrt zu der Rotationsrichtung der Wäschetrommel während des zweiten Reversierzyklus sein. Erfindungsgemäß umfasst das Verfahren die Schritte: Erfassen eines Konvergenzwerts des drehmomentbildenden Stroms $I_q$ während der Steuerungsphase des ersten Reversierzyklus, und Einstellen eines Referenzwerts für den drehmomentbildenden Strom $I_q$ in der Steuerungsphase des zweiten Reversierzyklus, wobei der Referenzwert auf dem erfassten Konvergenzwert basiert.

Dadurch wird beispielsweise der technische Vorteil erreicht, dass im Vergleich zu bekannten Verfahren weniger Energie beim Anfahren des Antriebsmotors verbraucht wird und der Antriebsmotor weniger stark belastet wird, was sich positiv auf die Lebensdauer des Antriebsmotors auswirken kann.

Das Verfahren gemäß dem dritten Aspekt der Erfindung kann durch die Steuereinrichtung gemäß dem ersten Aspekt der Erfindung durchgeführt werden. Daher ergeben sich weitere Ausführungsformen des Verfahrens gemäß dem dritten Aspekt der Erfindung aus den vorstehend und nachstehend beschriebenen weiteren Ausführungsformen der Steuereinrichtung gemäß dem ersten Aspekt der Erfindung.

Ausführungsformen der Erfindung basieren somit auf dem Grundgedanken, am Ende der Steuerungsphase eines Reversierzyklus, d.h. vor dem Übergang in eine Merge-Phase bzw. die Regelungsphase den letzten drehmomentbildenden Strom $I_q$ als Konvergenzwert zu erfassen und diesen Wert als Referenzwert für den drehmomentbildenden Strom $I_q$ und somit das Drehmoment in der Steuerungsphase von einem oder mehreren nachfolgenden Reversierzyklen zu verwenden. Dies ist insofern vorteilhaft, als dieser Wert im Zusammenhang mit dem anliegenden Lastmoment bzw. der Beladung der Wäschetrommel steht.

Weitere Ausführungsbeispiele der Erfindung sind in den Zeichnungen dargestellt und werden im Folgenden näher beschrieben.

Fig. 1 zeigt ein Blockschaltbild einer Steuereinrichtung zum Ansteuern eines Antriebsmotors eines Wäschepflegegeräts gemäß einer Ausführungsform;

Fig. 2 zeigt Spannungs- bzw. Stromverläufe von drei Phasen zum Betreiben eines BLDC-Antriebsmotors gemäß einer Ausführungsform;

Fig. 3 zeigt ein Flussdiagram mit Schritten eines Verfahrens zum Betreiben eines Antriebsmotors gemäß einer Ausführungsform; und

Fig. 4a und 4b zeigen Spannungs- bzw. Stromverläufe von drei Phasen zum Betreiben eines BLDC-Antriebsmotors gemäß einer Ausführungsform im Vergleich mit herkömmlichen Spannungs- bzw. Stromverläufen.

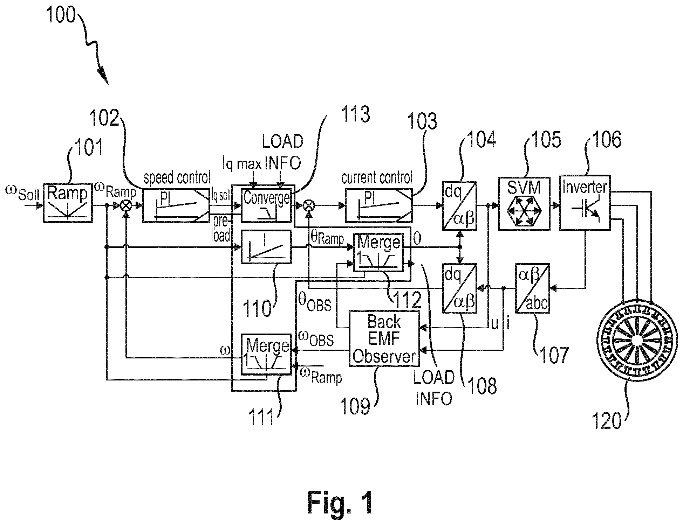

Figur 1 zeigt ein Übersichtsblockbild einer Steuereinrichtung 100 zum Betreiben eines Antriebsmotors 120 einer Wäschepflegevorrichtung. Gemäß einer Ausführungsform handelt es sich bei dem Antriebsmotor um einen dreiphasigen Motor mit geberloser Drehzahlregelung, insbesondere eine Gleichstrommotor in Form eines bürstenlosen Permanentmagnetmotors, welcher auch als BLDC- oder PMSM-Motor bekannt ist. Die in Figur 1 gezeigten Funktionen, Module, Blöcke usw. der Steuereinrichtung 100 können ganz oder teilweise als Hardware implementiert sein. Die Funktionen, Module, Blöcke usw. können aber zumindest teilweise auch als Software umgesetzt sein, z.B. als entsprechende Algorithmen.

Die Steuereinrichtung 100 weist unter anderem einen Rampengenerator oder Hochlaufgeber 101, einen PI-Regler 102 zur Drehzahleinstellung, einen PI-Regler 103 zur Stromeinstellung, einen inversen Park-Transformator 104, einen Raumvektor-Modulator 105 ("Space Vector Modulator"), einen Inverter 106, einen Clarke-Transformator 107, einen Park-Transformator 108, einen EMK-Beobachter 109 ("Back-EMF Observer"), einen Winkelintegrator 110 sowie einen ersten Merge-Block 111 und einen zweiten Merge-Block 112 auf. Der Inverter 106 ist über drei Phasenanschlüsse mit dem Antriebsmotor 120 verbunden, an denen die entsprechenden Spannungen U1 bis U3 anliegen bzw. die entsprechenden Ströme I1 bis I3 fließen. Dem Hochlaufgeber 101 wird eine gewünschte Enddrehzahl bzw. analog dazu eine gewünschte End-Winkelgeschwindigkeit $\omega_{Soll}$ vorgegeben, der einen entsprechenden rampenartigen (z.B. linearen) zeitlichen Verlauf einer gesteuerten Drehzahl bzw. Winkelgeschwindigkeit $\omega_{Soll}$ an den PI-Regler 102 zur Drehzahleinstellung (bzw. Einstellung einer Winkelgeschwindigkeit) ausgibt. Die Steuereinrichtung 100 ist bis hierhin ähnlich zu der auf den Seiten 3 bis 30, und Fig. 10, in der Druckschrift "Sensorless PMSM Control for an H-axis Washing Machine Drive" gezeigten Motorsteuerung ausgebildet. Daher wird für weitere Details auf die Druckschrift "Sensorless PMSM Control for an H-axis Washing Machine Drive" verwiesen, auf die hiermit vollumfänglich Bezug genommen wird.

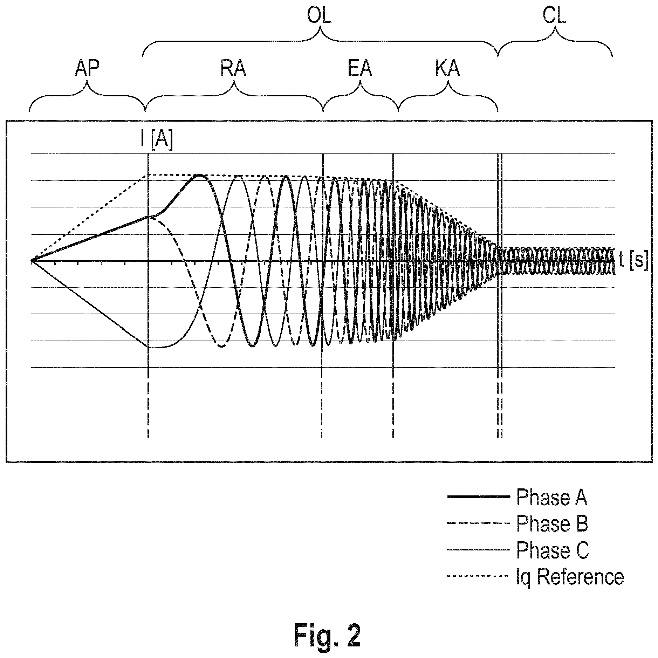

Die Steuereinrichtung 100 ist dazu ausgebildet, den Motor 120 gemäß dem in Figur 2 dargestellten Ablaufschema anzusteuern.

Figur 2 zeigt zeitliche Verläufe von Strömen I1, I2, I3 bzw. Spannungen U1, U2, U3 von drei Phasen zum Betreiben des dreiphasigen Antriebsmotors 120 im Anlauf. In einer ersten Ausrichtungsphase (AP; "Alignment") werden die Ströme I1, I2, I3 (bzw. die entsprechenden Spannungen U1, U2, U3) kontinuierlich erhöht, so dass sich der Rotor des Antriebsmotors 120 auf einen vorgegebenen bzw. festen Rotorwinkel ausrichten kann.

Auf die Ausrichtungsphase AP folgt eine Steuerungsphase OL ("Open Loop"), während der die Spannungen U1 bis U3 dem Antriebsmotor 120 als Wechselspannungen eingeprägt werden. Dabei wird dem Antriebsmotor 120 anfänglich ein drehmomentbildender Motorstrom $I_q$ mit einem maximalen Spitzenwert $I_{q.max}$ eingeprägt, was sich in Figur 2 in maximalen Stromamplituden zu Beginn der Steuerungsphase OL äußert. Der Zusammenhang zwischen den Strömen I1, I2, I3 bzw. Spannungen U1, U2, U3 von drei Phasen zum Betreiben des dreiphasigen Antriebsmotors 120 und dem drehmomentbildenden Strom $I_q$ ist dem Fachmann bekannt und wird im Detail beispielsweise in der vorstehend zitierten Druckschrift "Sensorless PMSM Control for an H-axis Washing Machine Drive" beschrieben.

Die Steuerungsphase OL weist einen ersten Abschnitt ("Rücksetzabschnitt" RA) auf, in dem der Beobachter 109 noch nicht aktiv ist. Der Rücksetzabschnitt RA der Steuerungsphase OL geht in einen anschließenden Einschwingabschnitt EA der Steuerungsphase OL über, in welchem der Beobachter 109 aktiv ist. Mit anderen Worten: durch die Aktivierung des Beobachters 109 erfolgt der Übergang vom Rücksetzabschnitt RA der Steuerungsphase OL in den Einschwingabschnitt EA der Steuerungsphase OL. Mittels des Beobachters 109 können aus Parametern des Motorbetriebs eine Winkelgeschwindigkeit $\omega$ und ein Rotorwinkel $\theta$ rekonstruiert werden.

In dem Einschwingabschnitt EA der Steuerungsphase OL kann ein Winkelfehler bzw. eine Abweichung $\theta_{Error}$ zwischen einem gesteuerten Rotorwinkel $\theta_{SET}$ und einem mittels des Beobachters 109 rekonstruierten Rotorwinkels $\theta_{OBS}$ bestimmt werden.

Der Konvergenzabschnitt KA der Steuerungsphase OL dient zur Überführung des in dem Einschwingabschnitt EA vorliegenden drehmomentbildenden Motorstroms $I_q$ auf den als Eingangsgröße für den Merge-Abschnitt gewünschten Wert, der, wie vorstehend beschrieben, in dem Einschwingabschnitt EA der Steuerungsphase bestimmt werden kann. In dem Konvergenzabschnitt KA können die Spannungen U1 bis U3 (bzw. die Ströme I1 bis I3) derart eingestellt (in Figur 2 verringert) werden, dass der drehmomentbildende Motorstrom $I_q$ den gewünschten Eingangswert erreicht, um sodann den Motorbetrieb von der Steuerungsphase OL in die Übergangsphase MP umzuschalten.

In der Übergangsphase MP können eine Drehzahl des Rotors bzw. eine Winkelgeschwindigkeit und der Rotorwinkel an mittels des Beobachters 109 rekonstruierte Werte $\theta_{OBS}$, $\omega_{OBS}$ für die folgende Regelungsphase CL angepasst werden. Dadurch wird auch der drehmomentbildende Motorstrom $I_q$ geändert (in diesem Fall verringert). Daher sollte der Eingangswert des drehmomentbildenden Motorstroms $I_q$ so bestimmt oder eingestellt worden sein, dass am Ende der Übergangsphase MP der drehmomentbildende Motorstrom $I_q$ einen Wert aufweist, welcher einem Wert der sich anschließenden Regelungsphase CL ("Closed Loop") entspricht.

Zweck der Übergangsphase ist somit ein Angleichen des gesteuerten Rotorwinkels $\theta_{SET}$ und der gesteuerten Winkelgeschwindigkeit $\omega_{SET}$ an die rekonstruierten Größen, die der Beobachter 109 ausgibt. Hierfür können die gesteuerten Größen in Richtung der rekonstruierten Werte innerhalb einer definierten Übergangszeit mit einer drehzahlabhängigen Wichtung $f_{\omega gesteuert}$ nachgeführt werden, so dass der Winkelfehler $\theta_{err}$ und der Fehler der Winkelgeschwindigkeit $\omega_{err}$ zu Null werden, z.B. gemäß

$$\theta_{aktuell(t)} = \theta_{OBS(t)} - (1 - f_{\omega gesteuert(n)}) * \theta_{err}$$

und

$$\omega_{aktuell(t)} = \omega_{OBS(t)} * f_{\omega gesteuert(n)} + (1 - f_{\omega gesteuert(n)}) * \omega_{SET(t)},$$

wobei $\theta_{aktuell}$ und $\omega_{aktuell}$ Momentanwerte der Übergangsphase sind. Die Wichtung $f_{\omega aktuell}$ kann von Null zu Beginn der Übergangsphase bis 1 gegen Ende der Übergangsphase ansteigen. Nach Abschluss dieser Übergangsphase erfolgt der Übergang in den geregelten Betrieb.

Zwischen dem Beginn der Steuerungsphase OL und dem Beginn der Regelungsphase CL, und ggf. auch noch während der Regelungsphase CL, kann eine Drehzahl des Rotors kontinuierlich erhöht werden, z.B. linear. Dies kann durch eine Periodenverkürzung bzw. Frequenzerhöhung der Spannungen U1 bis U3 (bzw. der entsprechenden Ströme I1 bis I3) erreicht werden. Zu Beginn der Regelungsphase CL sollte eine Mindestdrehzahl erreicht oder bereits überschritten worden sein, bei der eine geberlose Regelung der Drehzahl praktisch sinnvoll durchführbar ist. Es ist auch möglich, dass ein Übergang in die Übergangsphase MP vor Erreichen der Mindestdrehzahl durchgeführt wird, insbesondere mit Erreichen der Mindestdrehzahl.

In der in Figur 1 dargestellten Ausführungsform umfasst die Steuereinrichtung 100 ferner einen Konvergenzblock 113, mittels dem die Bestimmung des Winkelfehlers $\theta_{err}$ und die Anpassung des drehmomentbildenden Motorstroms $I_q$ während des Konvergenzabschnitts KA der Steuerungsphase OL durchgeführt werden kann. Dazu ist der Konvergenzblock 113 dem PI-Regler 102 zur Drehzahleinstellung nachgeschaltet. Zudem kann der Konvergenzblock 113 den maximal verfügbaren Wert $I_{qmax}$ des drehmomentbildenden Motorstroms $I_q$ erhalten und ferner von dem Beobachter 109 Werte des rekonstruierten Rotorwinkels $\theta_{OBS}$ und zudem von dem Winkelintegrator 110 Werte des gesteuerten Rotorwinkels $\theta_{SET} = \theta_{Ramp}$.

Für weitere Details zu einer möglichen Ausgestaltung der in Figur 1 illustrierten Steuereinrichtung wird auf die bereits vorstehend zitierte Druckschrift "Sensorless PMSM Control for an H-axis Washing Machine Drive" verwiesen und insbesondere auf die Seiten 3 bis 30 und Fig. 10 davon.

Wie dies nachstehend im Detail beschrieben wird, ist erfindungsgemäß die Steuereinrichtung 100 ausgebildet, während der Steuerungsphase OL, insbesondere des Konvergenzabschnitts KA der Steuerungsphase OL eines ersten Reversierzyklus einen Konvergenzwert des drehmomentbildenden Stroms $I_q$ zu erfassen, und in der Steuerungsphase OL eines nachfolgenden zweiten Reversierzyklus einen Referenzwert für den drehmomentbildenden Strom $I_q$ einzustellen, welcher auf dem erfassten Konvergenzwert des drehmomentbildenden Stroms $I_q$ basiert.

Wie bereits vorstehend im Zusammenhang mit den Figuren 1 und 2 beschrieben, kann die Steuereinrichtung 100 ausgebildet sein, in dem Konvergenzabschnitt KA der Steuerungsphase OL des ersten Reversierzyklus den drehmomentbildenden Strom $I_q$ kontinuierlich zu erniedrigen, um einen stetigen Momentenübergang zu gewährleisten. Dabei wird der drehmomentbildende Strom $I_q$ so lange kontinuierlich erniedrigt, bis der Winkelfehler $\theta_{err} = \theta_{OBS} - \theta_{SET}$, d.h. die Abweichung des erfassten Rotorwinkels $\theta_{OBS}$ von dem gesteuerten Rotorwinkel $\theta_{SET}$ des Rotors des Antriebsmotors 120 kleiner als ein Winkelfehlerschwellwert $\theta_{err,min}$ ist, d.h. $0° \leq \theta_{err} \leq \theta_{err,min}$. Der beim Eintreten dieser Bedingung erfasste drehmomentbildende Strom $I_q$ stellt den Konvergenzwert des drehmomentbildenden Stroms $I_q$ dar, auf dem der im nachfolgenden zweiten Reversierzyklus eingestellte Referenzwert für den drehmomentbildenden Strom $I_q$ basiert.

Gemäß einer Ausführungsform kann der Winkelfehlerschwellwert $\theta_{err,min}$ in einem Bereich von ungefähr 5° bis 10° liegen. Wie bereits vorstehend beschrieben, kann der Rotorwinkel $\theta_{OBS}$ des Rotors des Antriebsmotors 120 durch den Beobachter 109, insbesondere einen Luenberger-Beobachter erfasst werden.

Gemäß einer Ausführungsform kann die Steuereinrichtung 100 den erfassten Konvergenzwert direkt als Referenzwert zum Ansteuern des Antriebsmotors 120 in einem oder mehreren nachfolgenden Reversierzyklen verwenden, d.h. der Referenzwert zum Ansteuern des Antriebsmotors 120 kann gleich dem erfassten Konvergenzwert sein.

Gemäß einer weiteren Ausführungsform ist die Steuereinrichtung 100 ausgebildet einen Offset-Wert zu dem erfassten Konvergenzwert hinzu zu addieren, um den Referenzwert zu erhalten. Vorzugsweise liegt der Offset-Wert in einem Bereich von ungefähr 1 bis 2 Ampere und beträgt insbesondere ungefähr 1,5 Ampere.

Gemäß einer weiteren Ausführungsform ist die Steuereinrichtung 100 ausgebildet, als Referenzwert einen vordefinierten Minimalwert des drehmomentbildenden Stroms $I_q$ zu verwenden, falls die Summe aus dem erfassten Konvergenzwert und dem Offset-Wert kleiner als der vordefinierte Minimalwert ist, oder einen vordefinierten Maximalwert des drehmomentbildenden Stroms $I_q$ zu verwenden, falls die Summe aus dem erfassten Konvergenzwert und dem Offset-Wert größer als der vordefinierte Maximalwert ist. Der vordefinierte Minimalwert des drehmomentbildenden Stroms $I_q$ liegt vorzugsweise in einem Bereich von ungefähr 2 bis 5 Ampere und kann insbesondere ungefähr 4,5 Ampere betragen. Der vordefinierte Maximalwert des drehmomentbildenden Stroms $I_q$ liegt vorzugsweise in einem Bereich von ungefähr 5 bis 8 Ampere und kann insbesondere ungefähr 6,5 Ampere betragen.

Wie bereits vorstehend beschrieben, können der erste Reversierzyklus und der zweite Reversierzyklus aufeinander folgende Reversierzyklen mit unterschiedlicher Rotationsrichtung des Antriebsmotors 120 bzw. der Wäschetrommel sein. Dabei kann der Antriebsmotor 120 während eines Pausenabschnitts zwischen dem Ende des ersten Reversierzyklus und dem Beginn des zweiten Reversierzyklus pausieren, d.h. stillstehen. Bei einem sehr langen Pausenabschnitt kann es zu signifikanten Lasterhöhungen während der Pausenzeit kommen, und zwar bedingt durch Zugabe von Wasser oder durch die zusätzliche Aufnahme von Wasser durch die Wäsche. Diese Lasterhöhungen können im Folgenden zu fehlerhaften Anläufen führen, da diese während der Pausenzeit nicht erfasst werden konnten. Um dies zu vermeiden, ist gemäß einer Ausführungsform die Steuereinrichtung 100 ausgebildet, als Referenzwert für den drehmomentbildenden Strom $I_q$ einen vordefinierten Maximalwert des drehmomentbildenden Stroms $I_q$ einzustellen, falls die zeitliche Dauer des Pausenabschnitts größer als ein Pausenschwellwert ist. Mit anderen Worten: mit dem Pausenabschnitt kann sichergestellt werden, dass bei Überschreiten einer definierten Pausenzeit, der folgende Anlauf mit dem technisch möglichen Maximalstrom des Antriebsmotors 120 erfolgt, um einen sicheren Anlauf zu garantieren.

Vorzugsweise kann der Pausenschwellwert in einem Bereich von ungefähr 15 bis 45 Sekunden liegen und insbesondere ungefähr 30 Sekunden betragen. Der vordefinierte Maximalwert des drehmomentbildenden Stroms $I_q$ kann beispielsweise durch die konkrete Implementierung des Antriebsmotors 120 und/oder der Steuereinrichtung 100 bestimmt sein.

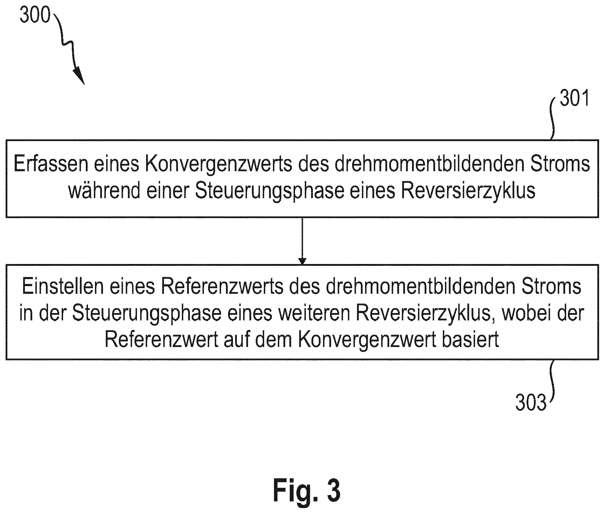

Das Flussdiagramm in Figur 3 illustriert ein entsprechendes Verfahren 300 zum Betreiben des Antriebsmotors 120. Dabei umfasst das Verfahren 300 die folgenden Schritte: Erfassen 301 eines Konvergenzwerts des drehmomentbildenden Stroms $I_q$ während der Steuerungsphase OL des ersten Reversierzyklus, und Einstellen 303 eines Referenzwerts für den drehmomentbildenden Strom $I_q$ in der Steuerungsphase OL des zweiten Reversierzyklus, wobei der Referenzwert auf dem erfassten Konvergenzwert basiert.

Das Verfahren 300 kann durch die Steuereinrichtung 100 durchgeführt werden. Daher ergeben sich weitere Ausführungsformen des Verfahrens 300 aus den vorstehend beschriebenen weiteren Ausführungsformen der Steuereinrichtung 300.

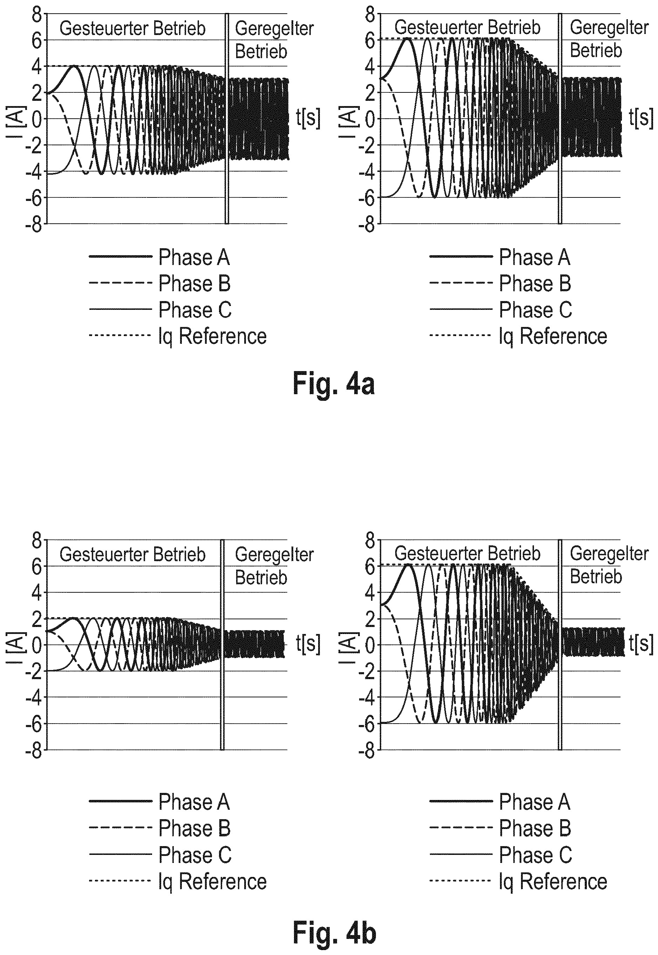

Die Figuren 4a und 4b zeigen Spannungs- bzw. Stromverläufe von drei Phasen zum Betreiben eines BLDC-Antriebsmotors gemäß einer Ausführungsform der Erfindung (jeweils auf der linken Seite) im Vergleich mit herkömmlichen Spannungs- bzw. Stromverläufen (jeweils auf der rechten Seite). Dabei ist in Figur 4a der Anlauf bei hohem Lastmoment, z.B. starker Beladung der Wäschetrommel, und in Figur 4b der Anlauf bei geringem Lastmoment, z.B. geringer Beladung der Wäschetrommel dargestellt. Wie sich den Figuren 4a und 4b entnehmen lässt, ergibt sich erfindungsgemäß bei kleinen Lasten ein deutlich kleinerer Anlaufstrom im gesteuerten Betrieb, was zu einer verringerten Energieaufnahme führt. Selbst wenn sich das Lastmoment durch Zugabe von Wasser ändert, ändert sich auch das mittlere Lastmoment über die Zeit und damit der Referenzwert nur sehr langsam. Öffnet der Benutzer die Tür, um beispielsweise Wäsche zuzugeben, kann gemäß einer Ausführungsform, wie vorstehend beschrieben, der Referenzwert wieder auf den technisch möglichen Maximalwert initialisiert werden und das Verfahren kann von neuem beginnen, d.h. es kann erneut der Konvergenzwert erfasst werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

**BEZUGSZEICHENLISTE**

| | |
|---|---|
| 100 | Steuereinrichtung |
| 102 | PI-Regler |
| 103 | PI-Regler |
| 104 | Inverser Park-Transformator |
| 105 | Raumvektor-Modulator |
| 106 | Inverter |
| 107 | Clarke-Transformator |
| 108 | Park-Transformator |
| 109 | EMK-Beobachter |
| 110 | Winkelintegrator |
| 111 | Erster Merge-Block |
| 112 | Zweiter Merge-Block |
| 113 | Konvergenzblock |
| 120 | Antriebsmotor |
| OL | Steuerungsphase |
| CL | Regelungsphase |
| AP | Ausrichtungsphase |
| EA | Einschwingabschnitt |
| KA | Konvergenzabschnitt |
| RA | Rücksetzabschnitt |
| 300 | Verfahren zum Betreiben eines Antriebsmotors |
| 301 | Erfassen eines Konvergenzwerts |
| 303 | Einstellen eines Referenzwerts |

**Patentansprüche**

1. Steuereinrichtung (100) zum Betreiben eines Antriebsmotors (120), insbesondere eines BLDC-Antriebsmotors auf der Grundlage eines drehmomentbildenden Stroms $I_q$, um eine rotierbar gelagerte Wäschetrommel eines Wäschepflegegeräts gemäß eines im Betrieb ablaufenden Wäschepflegeprogramms zu rotieren, wobei das Wäschepflegeprogramm wenigstens einen ersten Reversierzyklus und einen zweiten Reversierzyklus umfasst, die jeweils eine Steuerungsphase (OL) und eine Regelungsphase (CL) der Rotation der Wäschetrommel umfassen, **dadurch gekennzeichnet, dass**

   die Steuereinrichtung (100) ausgebildet ist, während der Steuerungsphase (OL) des ersten Reversierzyklus einen Konvergenzwert des drehmomentbildenden Stroms $I_q$ zu erfassen, und in der Steuerungsphase (OL) des zweiten Reversierzyklus einen Referenzwert für den drehmomentbildenden Strom $I_q$ einzustellen, welcher auf dem erfassten Konvergenzwert basiert.

2. Steuereinrichtung (100) nach Anspruch 1, **dadurch gekennzeichnet, dass** die Steuereinrichtung (100) ausgebildet ist, in einer Konvergenzphase der Steuerungsphase (OL) des ersten Reversierzyklus den drehmomentbildenden Strom $I_q$ kontinuierlich zu erniedrigen, einen Winkelfehler $\theta_{err}$ als Abweichung eines erfassten Rotorwinkels $\theta_{OBS}$ von einem gesteuerten Rotorwinkel $\theta_{SET}$ eines Rotors des Antriebsmotors (120) zu erfassen und den Konvergenzwert des drehmomentbildenden Stroms $I_q$ als den drehmomentbildenden Strom $I_q$ zu erfassen, bei dem der Winkelfehler $\theta_{err}$ kleiner als ein Winkelfehlerschwellwert $\theta_{err,min}$ ist.

3. Steuereinrichtung (100) nach Anspruch 2, **dadurch gekennzeichnet, dass** der Winkelfehlerschwellwert $\theta_{err,min}$ in einem Bereich von ungefähr 5° bis 10° liegt.

4. Steuereinrichtung (100) nach Anspruch 2 oder 3, **dadurch gekennzeichnet, dass** die Steuereinrichtung (100) einen Beobachter (109), insbesondere einen Luenberger-Beobachter umfasst, welcher ausgebildet ist, den Rotorwinkel $\theta_{OBS}$ des Rotors des Antriebsmotors (120) zu erfassen.

5. Steuereinrichtung (100) nach einem der vorhergehenden Ansprüche, **dadurch gekennzeichnet, dass** der Referenzwert gleich dem erfassten Konvergenzwert ist.

6. Steuereinrichtung (100) nach einem der Ansprüche 1 bis 4, **dadurch gekennzeichnet, dass** die Steuereinrichtung (100) zur Bestimmung des Referenzwerts ausgebildet ist, zu dem erfassten Konvergenzwert einen Offset-Wert zu addieren.

7. Steuereinrichtung (100) nach Anspruch 6, **dadurch gekennzeichnet, dass** der Offset-Wert in einem Bereich von ungefähr 1 bis 2 Ampere liegt, insbesondere ungefähr 1,5 Ampere beträgt.

8. Steuereinrichtung (100) nach Anspruch 6 oder 7, **dadurch gekennzeichnet, dass** die Steuereinrichtung (100) ausgebildet ist, für den Referenzwert einen vordefinierten Minimalwert des drehmomentbildenden Stroms $I_q$ zu verwenden, falls die Summe aus dem erfassten Konvergenzwert und dem Offset-Wert kleiner als der vordefinierte Minimalwert ist, oder für den Referenzwert einen vordefinierten Maximalwert des drehmomentbildenden Stroms $I_q$ zu verwenden, falls die Summe aus dem erfassten Konvergenzwert und dem Offset-Wert größer als der vordefinierte Maximalwert ist.

9. Steuereinrichtung (100) nach Anspruch 8, **dadurch gekennzeichnet, dass** der vordefinierte Minimalwert des drehmomentbildenden Stroms $I_q$ in einem Bereich von ungefähr 2 bis 5 Ampere liegt, insbesondere ungefähr 4,5 Ampere beträgt, und/oder der vordefinierte Maximalwert des drehmomentbildenden Stroms $I_q$ in einem Bereich von ungefähr 5 bis 8 Ampere liegt, insbesondere ungefähr 6,5 Ampere beträgt.

10. Steuereinrichtung (100) nach einem der vorhergehenden Ansprüche, **dadurch gekennzeichnet, dass** der erste Reversierzyklus und der zweite Reversierzyklus aufeinander folgende Reversierzyklen mit unterschiedlicher Rotationsrichtung des Antriebsmotors (120) sind und die Steuereinrichtung (100) ausgebildet ist, während eines Pausenabschnitts, welcher durch das Ende des ersten Reversierzyklus und den Beginn des zweiten Reversierzyklus definiert wird, den Antriebsmotor (120) nicht anzutreiben.

11. Steuereinrichtung (100) nach Anspruch 10, **dadurch gekennzeichnet, dass** die Steuereinrichtung (100) ausgebildet ist, falls die zeitliche Dauer des Pausenabschnitts größer als ein Pausenschwellwert ist, als Konvergenzwert für den drehmomentbildenden Strom $I_q$ einen vordefinierten Maximalwert des drehmomentbildenden Stroms $I_q$ einzustellen.

12. Steuereinrichtung (100) nach Anspruch 11, **dadurch gekennzeichnet, dass** der Pausenschwellwert in einem Bereich von ungefähr 15 bis 45 Sekunden liegt, insbesondere ungefähr 30 Sekunden beträgt.

13. Wäschepflegegerät mit einem Antriebsmotor (120), einer rotierbar gelagerten Wäschetrommel und einer Steuereinrichtung (100) gemäß einem der vorhergehenden Ansprüche zum Betreiben des Antriebsmotors (120), um die rotierbar gelagerte Wäschetrommel gemäß eines im Betrieb ablaufenden Wäschepflegeprogramms zu rotieren.

14. Verfahren (300) zum Betreiben eines Antriebsmotors (120), insbesondere eines BLDC-Antriebsmotors auf der Grundlage eines drehmomentbildenden Stroms $I_q$, um eine rotierbar gelagerte Wäschetrommel eines Wäschepflegegeräts gemäß eines im Betrieb ablaufenden Wäschepflegeprogramms zu rotieren, wobei das Wäschepflegeprogramm wenigstens einen ersten Reversierzyklus und einen zweiten Reversierzyklus umfasst, die jeweils eine Steuerungsphase (OL) und eine Regelungsphase (CL) der Rotation der Wäschetrommel umfassen,
**dadurch gekennzeichnet, dass** das Verfahren (300) umfasst:

Erfassen (301) eines Konvergenzwerts des drehmomentbildenden Stroms $I_q$ während der Steuerungsphase (OL) des ersten Reversierzyklus, und
Einstellen (303) eines Referenzwerts für den drehmomentbildenden Strom $I_q$ in der Steuerungsphase (OL) des zweiten Reversierzyklus, wobei der Referenzwert auf dem erfassten Konvergenzwert basiert.

**Claims**

1. Control device (100) for operating a drive motor (120), in particular a BLDC drive motor based on a torque-forming current $I_q$, in order to rotate a rotatably mounted laundry drum of a laundry care appliance according to a laundry care program which runs during operation, wherein the laundry care program comprises at least a first reversing cycle and a second reversing cycle, which comprise in each case an open-loop control phase (OL) and a closed-loop control phase (CL) of the rotation of the laundry drum,
**characterised in that**

> the control device (100) is embodied to detect a convergence value of the torque-forming current $I_q$ during the open-loop control phase (OL) of the first reversing cycle, and
> to set a reference value for the torque-forming current $I_q$, which is based on the detected convergence value, in the open-loop control phase (OL) of the second reversing cycle.

2. Control device (100) according to claim 1, **characterised in that** the control device (100) is embodied to continuously lower the torque-forming current $I_q$ in a convergence phase of the open-loop control phase (OL) of the first reversing cycle, to detect an angle error $\theta_{err}$ as a variation of a detected rotor angle $\theta_{OBS}$ from a controlled rotor angle $\theta_{SET}$ of a rotor of the drive motor (120) and to detect the convergence value of the torque-forming current $I_q$ as the torque-forming current $I_q$, in which the angle error $\theta_{err}$ is smaller than an angle error threshold value $\theta_{err,min}$.

3. Control device (100) according to claim 2, **characterised in that** the angle error threshold value $\theta_{err,min}$ lies in a range of approx. 5° to 10°.

4. Control device (100) according to claim 2 or 3, **characterised in that** the control device (100) comprises an observer (109), in particular a Luenberger observer, which is embodied to detect the rotor angle $\theta_{OBS}$ of the rotor of the drive motor (120).

5. Control device (100) according to one of the preceding claims, **characterised in that** the reference value equates to the detected convergence value.

6. Control device (100) according to one of claims 1 to 4, **characterised in that** the control device (100) is embodied to determine the reference value, to add an offset value to the detected convergence value.

7. Control device (100) according to claim 6, **characterised in that** the offset value lies in a range of approximately 1 to 2 amperes, in particular approximately 1.5 amperes.

8. Control device (100) according to claim 6 or 7, **characterised in that** the control device (100) is embodied to use a predefined minimum value of the torque-forming current $I_q$ for the reference value if the total of the detected convergence value and the offset value is less than the predefined minimum value, or to use a predefined maximum value of the torque-forming current $I_q$ for the reference value if the total of the detected convergence value and the offset value is greater than the predefined maximum value.

9. Control device (100) according to claim 8, **characterised in that** the predefined minimum value of the torque-forming current $I_q$ lies in a range of approximately 2 to 5 amperes, in particular approximately 4.5 amperes, and/or the predefined maximum value of the torque-forming current $I_q$ lies in a range of approximately 5 to 8 amperes, in particular approximately 6.5 amperes.

10. Control device (100) according to one of the preceding claims, **characterised in that** the first reversing cycle and the second reversing cycle are consecutive reversing cycles with a different direction of rotation of the drive motor (120) and the control device (100) is embodied not to drive the drive motor (120) during a pause section, which is defined by the end of the first reversing cycle and the beginning of the second reversing cycle.

11. Control device (100) according to claim 10, **characterised in that** the control device (100) is embodied to set a predefined maximum value of the torque-forming current $I_q$ as convergence value for the torque-forming current $I_q$ if the temporal duration of the pause section is greater than a pause threshold value.

12. Control device (100) according to claim 11, **characterised in that** the pause threshold value lies in a range of approximately 15 to 45 seconds, in particular approximately 30 seconds.

**13.** Laundry care appliance with a drive motor (120), a rotatably mounted laundry drum and a control device (100) according to one of the preceding claims for operating the drive motor (120), in order to rotate the rotatably mounted laundry drum according to a laundry care program which runs during operation.

**14.** Method (300) for operating a drive motor (120), in particular a BLDC drive motor based on a torque-forming current $I_q$, in order to rotate a rotatably mounted laundry drum of a laundry care appliance according to a laundry care program which runs during operation, wherein the laundry care program comprises at least a first reversing cycle and a second reversing cycle, which comprise in each case an open-loop control phase (OL) and a closed-loop control phase (CL) of the rotation of the laundry drum,

**characterised in that** the method (300) comprises

detecting (301) a convergence value of the torque-forming current $I_q$ during the open-loop control phase (OL) of the first reversing cycle and

setting (303) a reference value for the torque-forming current $I_q$ in the open-loop control phase (OL) of the second reversing cycle, wherein the reference value is based on the detected convergence value.


**Revendications**

**1.** Dispositif de commande (100) pour faire fonctionner un moteur d'entraînement (120), en particulier un moteur d'entraînement BLDC sur la base d'un courant générateur de couple $I_q$, afin de faire tourner un tambour à linge monté à rotation d'un appareil d'entretien du linge selon un programme d'entretien de linge exécuté en service, dans lequel le programme d'entretien du linge comprend au moins un premier cycle d'inversion et un deuxième cycle d'inversion, qui comprennent chacun une phase de commande en boucle ouverte (OL) et une phase de régulation en boucle fermée (CL) de la rotation du tambour à linge,

**caractérisé en ce que** :

le dispositif de commande (100) est configuré pour acquérir, pendant la phase de commande en boucle ouverte (OL) du premier cycle d'inversion, une valeur de convergence du courant générateur de couple $I_q$, et

pour régler, dans la phase de commande en boucle ouverte (OL) du deuxième cycle d'inversion, une valeur de référence pour le courant générateur de couple $I_q$, qui est basée sur la valeur de convergence acquise.

**2.** Dispositif de commande (100) selon la revendication 1, **caractérisé en ce que** le dispositif de commande (100) est configuré pour diminuer de façon continue le courant générateur de couple $I_q$ dans une phase de convergence de la phase de commande en boucle ouverte (OL) du premier cycle d'inversion, détecter une erreur angulaire $\theta_{err}$ à titre d'écart d'un angle de rotor détecté $\theta_{OBS}$ par rapport à un angle de rotor commandé $\theta_{SET}$ d'un rotor du moteur d'entraînement (120) et acquérir la valeur de convergence du courant générateur de couple $I_q$ à titre de courant générateur de couple $I_q$, avec lequel l'erreur angulaire $\theta_{err}$ est inférieure à une valeur seuil d'erreur angulaire $\theta_{err,min}$.

**3.** Dispositif de commande (100) selon la revendication 2, **caractérisé en ce que** la valeur seuil d'erreur angulaire $\theta_{err,min}$ se situe dans une plage d'environ 5° à 10°.

**4.** Dispositif de commande (100) selon la revendication 2 ou 3, **caractérisé en ce que** le dispositif de commande (100) comprend un observateur (109), en particulier un observateur de type Luenberger, qui est configuré pour détecter l'angle de rotor $\theta_{OBS}$ du rotor du moteur d'entraînement (120).

**5.** Dispositif de commande (100) selon l'une des revendications précédentes, **caractérisé en ce que** la valeur de référence est égale à la valeur de convergence acquise.

**6.** Dispositif de commande (100) selon l'une des revendications 1 à 4, **caractérisé en ce que** le dispositif de commande (100) est configuré, pour la détermination de la valeur de référence, de façon à ajouter une valeur de décalage à la valeur de convergence acquise.

**7.** Dispositif de commande (100) selon la revendication 6, **caractérisé en ce que** la valeur de décalage se situe dans une plage d'environ 1 à 2 ampères, en particulier est d'environ 1,5 ampères.

**8.** Dispositif de commande (100) selon la revendication 6 ou 7, **caractérisé en ce que** le dispositif de commande (100) est configuré pour utiliser pour la valeur de référence une valeur minimale prédéfinie du courant générateur de couple I$_q$ dans le cas où la somme de la valeur de convergence acquise et de la valeur de décalage est inférieure à la valeur minimale prédéfinie, ou pour utiliser, pour la valeur de référence, une valeur maximale prédéfinie du courant générateur de couple I$_q$ dans le cas où la somme de la valeur de convergence acquise et de la valeur de décalage est supérieure à la valeur maximale prédéfinie.

9. Dispositif de commande (100) selon la revendication 8, **caractérisé en ce que** la valeur minimale prédéfinie du courant générateur de couple I$_q$ se situe dans une plage d'environ 2 à 5 ampères, en particulier est d'environ 4,5 ampères, et/ou la valeur maximale prédéfinie du courant générateur de couple I$_q$ se situe dans une plage d'environ 5 à 8 ampères, en particulier est d'environ 6,5 ampères.

10. Dispositif de commande (100) selon l'une des revendications précédentes, **caractérisé en ce que** le premier cycle d'inversion et le deuxième cycle d'inversion sont des cycles d'inversion consécutifs ayant un sens de rotation différent du moteur d'entraînement (120) et le dispositif de commande (100) est configuré pour ne pas actionner le moteur d'entraînement (120) pendant une période d'arrêt, qui est définie par la fin du premier cycle d'inversion et le début du deuxième cycle d'inversion.

11. Dispositif de commande (100) selon la revendication 10, **caractérisé en ce que** le dispositif de commande (100) est configuré pour régler une valeur maximale prédéfinie du courant générateur de couple I$_q$ à titre de valeur de convergence pour le courant générateur de couple I$_q$ dans le cas où la durée de la période d'arrêt est supérieure à une valeur seuil d'arrêt.

12. Dispositif de commande (100) selon la revendication 11, **caractérisé en ce que** la valeur seuil d'arrêt se situe dans une plage d'environ 15 à 45 secondes, en particulier est d'environ 30 secondes.

13. Appareil d'entretien du linge comprenant un moteur d'entraînement (120), un tambour à linge monté à rotation et un dispositif de commande (100) selon l'une des revendications précédentes pour faire fonctionner le moteur d'entraînement (120), afin de faire tourner le tambour à linge monté à rotation selon un programme d'entretien du linge exécuté en service.

14. Procédé (300) pour faire fonctionner un moteur d'entraînement (120), en particulier un moteur d'entraînement BLDC sur la base d'un courant générateur de couple I$_q$, afin de faire tourner un tambour à linge monté à rotation d'un appareil d'entretien du linge selon un programme d'entretien de linge exécuté en service, dans lequel le programme d'entretien du linge comprend au moins un premier cycle d'inversion et un deuxième cycle d'inversion, qui comprennent chacun une phase de commande en boucle ouverte (OL) et une phase de régulation en boucle fermée (CL) de la rotation du tambour à linge,
**caractérisé en ce que** le procédé (300) comprend :

l'acquisition (301) d'une valeur de convergence du courant générateur de couple I$_q$ pendant la phase de commande en boucle ouverte (OL) du premier cycle d'inversion, et
le réglage (303) d'une valeur de référence pour le courant générateur de couple I$_q$ dans la phase de commande en boucle ouverte (OL) du deuxième cycle d'inversion, la valeur de référence étant basée sur la valeur de convergence acquise.

**Fig. 1**

Fig. 2

300

301

Erfassen eines Konvergenzwerts des drehmomentbildenden Stroms während einer Steuerungsphase eines Reversierzyklus

Einstellen eines Referenzwerts des drehmomentbildenden Stroms in der Steuerungsphase eines weiteren Reversierzyklus, wobei der Referenzwert auf dem Konvergenzwert basiert

303

# Fig. 3

Fig. 4a

Fig. 4b

## IN DER BESCHREIBUNG AUFGEFÜHRTE DOKUMENTE

### In der Beschreibung aufgeführte Patentdokumente

- EP 2659583 B1
- DE 102016211153 A1